# EUROPÄISCHE PATENTANMELDUNG

(11) **EP 1 769 666 A1**
(43) Veröffentlichungstag der Anmeldung: **04.04.2007**
(21) Anmeldenummer: 05021418.8
(22) Anmeldetag: 30.09.2005
(51) Int. Cl.: A01D 34/66

(54) **Mähwerk**

(71) Anmelder: Christensen, John, 6000 Kolding (DK)
(72) Erfinder: Christensen, John, 6000 Kolding (DK)
(74) Vertreter: Müller, Thomas Michael

(57) **Zusammenfassung**

Mähwerk, das von einer landwirtschaftlichen Maschine, insbesondere einem Traktor 7, in einer Arbeitsrichtung A bewegbar ist, umfassend
ein Traggestell 1, das Anschlussmittel 8 zum Anbringen an eine Anbaueinrichtung 6 eines Traktors 7 aufweist,
mindestens einen ersten Schwenkarm 2, der um eine erste Hauptschwenkachse HS schwenkbar am Traggestell 1 befestigt ist, und
mindestens eine erste Mäheinheit 4, die um eine erste Nebenschwenkachse NS1 schwenkbar am ersten Schwenkarm 2 befestigt ist und mittels des ersten Schwenkarms 2 in eine Arbeitsstellung, eine Vorgewendestellung und eine Transportstellung schwenkbar ist.

## Beschreibung

Die Erfindung betrifft ein Mähwerk, das von einer landwirtschaftlichen Maschine, insbesondere einem Traktor, in einer Arbeitsrichtung bewegbar ist, umfassend ein Traggestell, das Anschlussmittel zum Anbringen an eine Anbaueinrichtung eines Traktors aufweist, mindestens einen ersten Schwenkarm, der um eine erste Hauptschwenkachse schwenkbar am Traggestell befestigt ist und mindestens eine erste Mäheinheit, die am ersten Schwenkarm befestigt ist und mittels des ersten Schwenkarms in eine Arbeitsstellung, eine Vofgewendestellung und eine Transportstellung schwenkbar ist.

Ein solches Mähwerk ist aus der DE 100 11 730 C2 bekannt. Der erste Schwenkarm kann mittels eines Hydraulikzylinders zwischen der Arbeitsstellung, der Vorgewendestellung und der Transportstellung geschwenkt werden. In der Arbeitsstellung erstreckt sich die Mäheinheit quer zur Arbeitsrichtung über eine Arbeitsbreite und verläuft horizontal möglichst parallel zum Boden. In der Vorgewendestellung ist die Mäheinheit vom Boden angehoben und verläuft winklig zum Boden, ist also geringfügig hochgeschwenkt. In der Transportstellung befindet sich die Mäheinheit in einer annähernd vertikalen Stellung, so dass eine geringe Breite für den Transport des Mähwerks auf der Straße erzielt wird. Durch den Schwenkarm lassen sich auch Badenunebenheiten in der Betriebsstellung und während des Betriebs ausgleichen, da je nach Bodenunebenheiten der Schwenkarm verschwenkt wird und die Mäheinheit den Bodenunebenheiten folgt. Nachteilig wirkt sich hierbei jedoch aus, dass beim Hochschwenken die Mäheinheit nicht parallel zum Boden bewegt werden kann, sondem eine winklige Position zum Boden annimmt, so dass die äußere Seite, also die Seite der Mäheinheit, die am weitesten von der ersten Hauptschwenkachse entfernt ist, weiter vom Boden entfernt ist, als die innere Seite, die der ersten Hauptschwenkachse angenähert ist.

Aufgabe der vorliegenden Erfindung ist es, ein Mähwerk der eingangs genannten Art bereitzustellen, das es erlaubt, Bodenunebenheiten besser auszugleichen.

Die Aufgabe wird erfindungsgemäß durch ein Mähwerk, das von einer landwirtschaftlichen Maschine, insbesondere einem Traktor, in einer Arbeitsrichtung bewegbar ist, umfassend
ein Traggestell, das Anschlussmittel zum Anbringen an eine Anbaueinrichtung eines Traktors aufweist,
einen ersten Schwenkarm, der um eine erste Hauptschwenkachse schwenkbar am Traggestell befestigt ist, und
eine erste Mäheinheit, die um eine erste Nebenschwenkachse schwenkbar am ersten Schwenkarm befestigt ist und mittels des ersten Schwenkarms in eine Arbeitsstellung, eine Vorgewendestellung und eine Transportstellung schwenkbar ist, gelost.

Der erste Schwenkarm sorgt neben der Möglichkeit zum Verstellen der ersten Mäheinheit zwischen den unterschiedlichen Stellungen auch dafür, dass er diese Bodenunebenheiten ausgleichen kann. Um ein möglichst paralleles Anheben der Mäheinheit zu gewährleisten, bei der die Mäheinheit selbst nicht zum Traktor schwenkt oder nur in einem solchen Grade schwenkt, dass Bodenunebenheiten ausgeglichen, werden, ist die erste Nebenschwenkachse vorgesehen, die vorzugsweise zumindest annähemd parallel zur ersten Hauptschwenkachse angeordnet ist.

Vorzugsweise weist das Traggestell einen Rohrabschnitt auf, um den der erste Schwenkarm gelagert ist und durch den eine Antriebswelle geführt ist, mittels derer die erste Mäheinheit angetrieben ist. Hierbei kann der erste Schwenkarm um eine Aut3enumfangsfläche des Rohrabschnitts gelagert sein. Diese Lagerung ist vorzugsweise als Gleitlagerung ausgebildet.

Es kann eine Zwischenwelle als durch den Rohrabschnitt geführte Antriebswelle vorgesehen sein, die im Rohrabschnitt drehbar gelagert ist. Die Zwischenwelle wird von einer Hauptantriebswelle, die antriebsmäßig einerseits mit einer Zapfwelle des Traktors und andererseits mit der Zwischenwelle verbunden wird, angetrieben. Hierbei ist ferner eine erste Antriebswelle vorgesehen, die antriebsmäßig mit der Zwischenwelle und einem ersten Verteilergetriebe zum Antreiben der ersten Mäheinheit verbunden ist. Das erste Verteilergetriebe ist hierbei direkt an der ersten Mäheinheit befestigt, vorzugsweise an einer Innenseite der ersten Mäheinheit bzw. einer einer Mittelachse des Traggestells angenäherten Seite der ersten Mäheinheit. Somit wird gewährleistet, dass zwischen der Hauptantriebswelle, der Zwischenwelle und der ersten Antriebswelle nur geringe Abwinkelungen auftreten.

Vorzugweise ist in Arbeitsstellung der zumindest ersten Mäheinheit die Zwischenwelle und die erste Antriebswelle zumindest in etwa auf einer gemeinsamen Achse angeordnet.

Alternativ kann auch vorgesehen sein, dass keine Zwischenwelle vorgesehen ist und die Hauptantriebswelle durch eine zentrale Bohrung des Rohrabschnitts hindurchgeführt ist, wobei die Hauptantriebswelle einerseits mit der Zapfwelle des Traktors und andererseits mit dem ersten Verteilergetriebe antriebsmäßig verbunden ist.

Vorzugsweise weist das Mähwerk einen zweiten Schwenkarm auf, der um eine zweite Hauptschwenkachse schwenkbar am Traggestell befestigt ist. Ferner ist eine zweite Mäheinheit vorgesehen, die um eine zweite Nebenschwenkachse schwenkbar am zweiten Schwenkarm befestigt ist und mittels des zweiten Schwenkarms in eine Arbeitsstellung, eine Vorgewendestellung und eine Transportstellung schwenkbar ist.

Vorzugsweise ist hierbei die zweite Nebenschwertkachse zumindest annähernd parallel zur zweiten Hauptschwenkachse und in Arbeitsrichtung betrachtet seitlich versetzt zu dieser angeordnet ist.

In einer bevorzugten Ausführungsform sind die erste Hauptschwenkachse und die zweite Hauptschwenkachse aufeinander angeordnet.

Vorzugsweise sind die erste Schwenkachse und die zweite Schwenkachse zu unterschiedlichen Seiten von der jeweiligen Hauptschwenkachse seitlich versetzt angeordnet.

Ferner sind die Mäheinheiten in Arbeitsrichtung betrachtet hintereinander angeordnet, wobei sich ihre seitlich erstreckenden Arbeitsbreiten teilweise überlappen.

Vorzugsweise weist das Traggestell einen Rohrabschnitt auf, um den sowohl der erste Schwenkarm als auch der zweite Schwenkarm gelagert ist, wobei durch den Rohrabschnitt eine Antriebswelle geführt ist, mittels derer die Mäheinheiten angetrieben sind.

Ebenso kann hierbei eine Zwischenwelle als durch den Rohrabschnitt geführte Antriebswelle vorgesehen sein, die im Rohrabschnitt drehbar gelagert ist.

Hierbei kann ferner eine erste Antriebswelle vorgesehen sein, die antriebsmäßig mit der Zwischenwelle und einem ersten Antriebsgetriebe zum Antreiben der ersten Mäheinheit verbunden ist und eine zweite Antriebswelle vorgesehen sein, die antriebsmäßig mit dem ersten Antriebsgetriebe und einem zweiten Antriebsgetriebe zum Antreiben der zweiten Mäheinheit verbunden ist.

In Arbeitsstellung der Mäheinheiten sind die Zwischenwelle, die erste Antriebswelle und die zweite Antriebswelle zumindest in etwa auf einer gemeinsamen Achse angeordnet. Somit ergeben sich geringe Abwinkelungen der Antriebswellen, die vorzugsweise als Gelenkwellen, z. B. Kreuzgelenkwellen, ausgebildet sind.

Auch hierbei kann alternativ zu der Zwischenwelle vorgesehen sein, dass eine Hauptantriebswelle von der Zapfwelle direkt zum ersten Antriebsgetriebe führt und durch eine zentrale Bohrung des Bohrabschnitts geführt ist.

Weiter liegen vorzugsweise die Drehachsen der Antriebswellen und die Hauptschwenkachsen aufeinander, so dass ebenfalls geringe Abwinkelungen erzielt werden, wenn die Schwenkarme verschwenkt werden.

Vorzugsweise sind die Antriebsgetriebe an den einer Mittelachse des Traggestells angenäherten Seite der Mäheinheiten angeordnet.

Ein bevorzugtes Ausführungsbeispiel wird im folgenden anhand der Zeichnungen näher erläutert. Hierin zeigen
- Figur 1: eine perspektivische Darstellung eines erfindungsgemäßen Mähwerks;
- Figur 2: eine Draufsicht einer Skizze des Mähwerks gemäß Fig. 1;
- Figur 3: eine perspektivische Darstellung eines Traggestells des Mähwerks gemäß Fig. 1;
- Figur 4: eine Rückansicht des Mähwerks gemäß Fig. 1 in der Arbeitsstellung;
- Figur 5: eine Seitenansicht des Mähwerks gemäß Fig. 4;
- Figur 6: eine Rückansicht des Mähwerks gemäß Fig. 1 in der Vorgewendestellung;
- Figur 7: eine Seitenansicht des Mähwerks gemäß Fig. 6;
- Figur 8: eine Rückansicht des Mähwerks gemäß Fig. 1 in der Transportstellung;
- Figur 9: eine Seitenansicht des Mähwerks gemäß Fig. 8;
- Figur 10: eine Rückansicht des Mähwerks gemäß Fig. 1 in einer Endschwenkstellung der Mäheinheiten und
- Figur 11: eine Seitenansicht des Mähwerks gemäß Fig. 10.

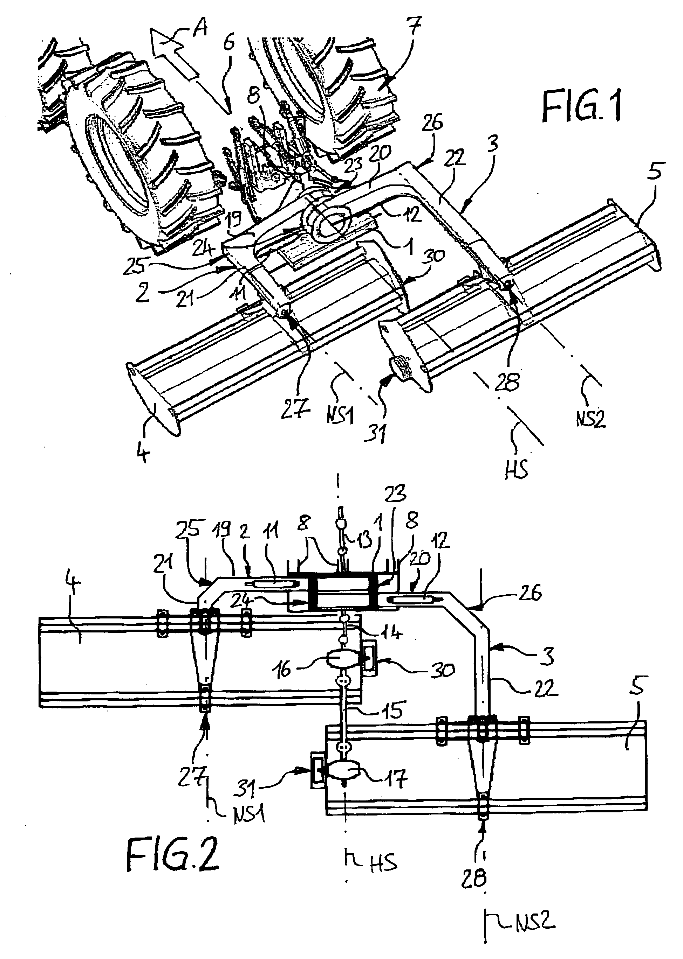

Figur 1 zeigt eine perspektivische Darstellung eines erfindungsgemäßen Mähwerks, wobei ein Traktor 7 nur ansatzweise dargestellt ist. Ferner sind zur klareren Übersicht keine Bauteile zum Antreiben der Mäheinheiten dargestellt. Figur 2 zeigt eine Draufsicht einer Skizze des Mähwerks gemäß Figur 1, wobei der Traktor 7 ebenfalls nur ansatzweise gezeigt ist, jedoch sind die Antriebsbauteile dargestellt. Die Figuren 1 und 2 werden im folgenden zusammen beschrieben.

Das Mähwerk umfasst ein Traggestell 1, das an einer Anbaueinrichtung 6 in Form eines Dreipunktgestänges eines Traktors 7 angebracht ist. Das Mähwerk lässt sich somit mittels des Traktors 7 in einer Arbeitsrichtung A bewegen. An dem Traggestell 1 sind ein erster Schwenkarm 2 und ein zweiter Schwenkarm 3 schwenkbar befestigt. Der erste Schwenkarm 2 trägt eine erste Mäheinheit 4, die um eine erste Nebenschwenkachse NS1 gegenüber dem ersten Schwenkarm 2 schwenkbar ist. Der zweite Schwenkarm 3 trägt eine zweite Mäheinheit 5, die an dem zweiten Schwenkarm 3 um eine zweite Nebenschwenkachse NS2 schwenkbar befestigt ist. Die Schwenkarme 2, 3 sind um eine gemeinsame Hauptschwenkachse HS am Traggestell 1 schwenkbar, wobei die Hauptschwenkachse HS in Richtung der Arbeitsrichtung A ausgerichtet ist und gleichzeitig eine Mittelachse des Traggestells 1 darstellt. Die Schwenkarme 2, 3 sind L-förmig gestaltet, wobei sie jeweils einen ersten Armabschnitt 19, 20 bildet, der im rechten Winkel zur Hauptschwenkachse HS verläuft. In der in den Figuren 1 und 2 dargestellten Arbeitsstellung der Mäheinheiten 4, 5 verlaufen die beiden ersten Armabschnitte 19, 20 waagerecht jeweils zu entgegengesetzten Seiten der Hauptschwenkachse HS. An einem der ersten Enden 23, 24 der ersten Armabschnitte 19, 20 sind die Schwenkarme 2, 3 schwenkbar am Traggestell 1 befestigt. An den ersten Enden 23, 24 abgewandten zweiten Enden 25, 26 der ersten Armabschnitte 19, 20 schließen sich zweite Armabschnitte 21, 22 an, die horizontal und parallel zur Hauptschwenkachse HS verlaufen. An den freien Enden 27, 28 der zweiten Armabschnitte 21, 22 sind die Mäheinheiten 4, 5 um Nebenschwenkachsen NS1, NS2 schwenkbar mit den Schwenkarmen 2, 3 verbunden. Die Nebenschwenkachsen NS1, NS2 sind parallel zur Hauptschwenkachse HS angeordnet.

Zum Schwenken der Schwenkarme 2, 3 ist unterhalb des ersten Armabschnitts 19 des ersten Schwenkarms 2 ein erste Hydraulikzylinder 11 und unterhalb des ersten Armabschnitts 20 des zweiten Schwenkarms 3 ein zweiter Hydraulikzylinder 12 angeordnet. Die Hydraulikzylinder 11, 12 sind zur Verdeutlichung auch in der Draufsicht gemäß Figur 2 dargestellt, obwohl sie unterhalb der Schwenkarme 2, 3 vorgesehen sind. Die Hydraulikzylinder 11, 12 stützen sich jeweils einerseits gegen das Traggestell 1 und andererseits gegen den jeweiligen Schwenkarm 2, 3 ab. Die Hydraulikzylinder 11, 12 können als einfach wirkende Hydraulikzylinder ausgebildet sein, wobei durch Beaufschlagung der Hydraulikzylinder 11, 12 die Schwenkarme 2, 3 um die Hauptschwenkachse HS nach oben geschwenkt werden. Hierdurch werden die gesamten Mäheinheiten 4, 5 angehoben. Werden die Hydraulikzylinder 11, 12 drucklos geschaltet, schwenken die Schwenkarme 2, 3 aufgrund der Schwerkraft zurück nach unten und die Mäheinheiten 4, 5 werden wieder abgesenkt.

In der Arbeitsstellung der Mäheinheiten 4, 5 können diese um die Nebenschwenkachsen NS1, NS2 gegenüber den Schwenkarmen 2, 3 schwenken und somit seitliche Bodenunebenheiten ausgleichen.

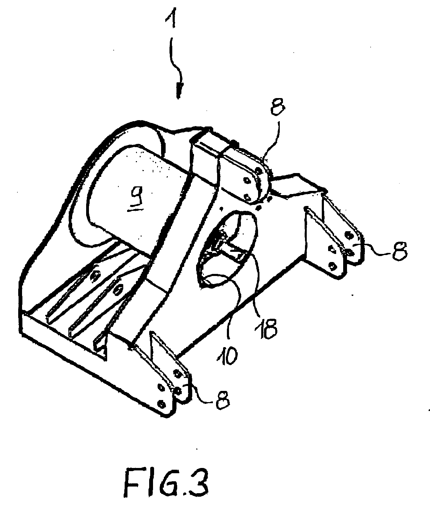

In Figur 3 ist das Traggestell 1 separat dargestellt. Das Traggestell 1 weist Anschlussmittel 8 zum Befestigen des Traggestells 1 an der Anbaueinrichtung des Traktors auf. Ferner ist ein Rohrabschnitt 9 vorgesehen, an dem die Schwenkarme schwenkbar befestig sind. Die Schwenkarme weisen jeweils einen Durchbruch auf, mit dem sie um den Rohrabschnitt 9 angeordnet sind, so dass je Schwenkarm eine Gleitlagerung gebildet ist. Der Rohrabschnitt 9 bildet ferner einen Durchgang 10, in dem eine Zwischenwelle 18 gelagert ist. Die Zwischenwelle 18 dient zum Antreiben der Mäheinheiten und kann zu diesem Zweck mit einer Zapfwelle eines Traktors antriebsmäßig verbunden werden.

In Figur 2 ist eine Hauptantriebswelle 13 dargestellt, die einerseits antriebsmäßig mit der Zapfwelle des Traktors 7 und andererseits antreibsmäßig mit der Zwischenwelle des Traggestells 1 verbunden ist. Die Zwischenwelle verläuft durch den oben erwähnten Durchgang des Rohrabschnitts und ist an dem gegenüberliegenden Ende antreibsmäßig mit einer ersten Antriebswelle 14 verbunden, die ihrerseits antreibsmäßig mit einem ersten Antriebsgetriebe 16 verbunden ist. Das erste Antriebsgetriebe 16 dient zum Antreiben der ersten Mäheinheit 4. Das erste Antriebsgetriebe 16 weist eine Abtriebswelle auf, die antriebsmäßig mit einer zweiten Antriebswelle 15 verbunden ist, die mit einem zweiten Antriebsgetriebe 17 zum Antreiben der zweiten Mäheinheit 5 verbunden ist. Das erste Antriebsgetriebe 16 ist auf der ersten Mäheinheit 4 und das zweite Antriebsgetriebe 17 auf der zweiten Mäheinheit 5 befestigt. Sämtliche Antriebswellen 13, 14, 15 sind als Gelenkwellen, vorzugsweise als Kreuzgelenkwellen ausgebildet.

In Figur 2 lässt sich gut erkennen, dass in der Arbeitsstellung der Mäheinheiten 4, 5 die Hauptantriebswelle 13, die Zwischenwelle, die erste Antriebswelle 14 und die zweite Antriebswelle 15 auf einer gemeinsamen Achse angeordnet sind. Sämtliche Antriebswellen 13, 14, 15 sind auf der Hauptschwenkachse HS angeordnet. Hierdurch ergibt sich in der Arbeitsstellung der Mäheinheiten 4, 5, dass die Gelenkwellen nicht oder je nach Schwenkstellung aufgrund von einem Ausgleich von Bodenunebenheiten nur geringfügig abgewinkelt sind.

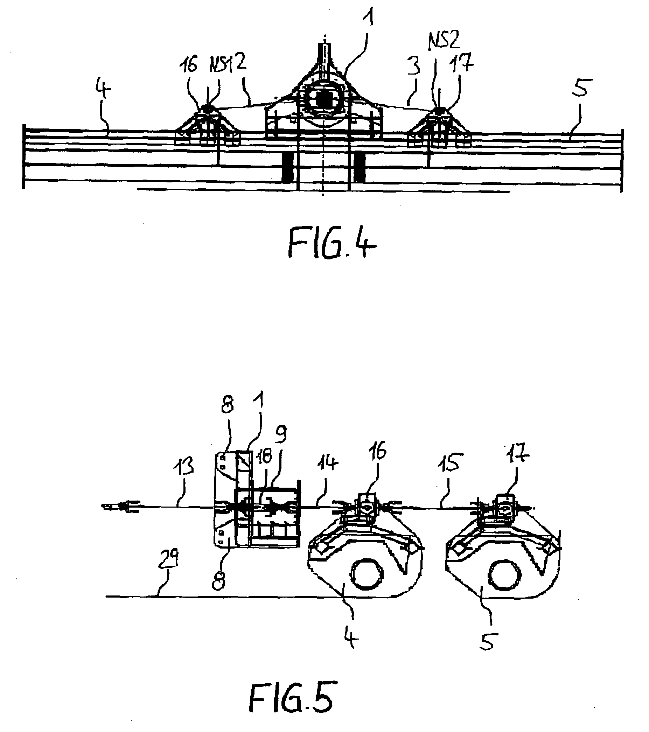

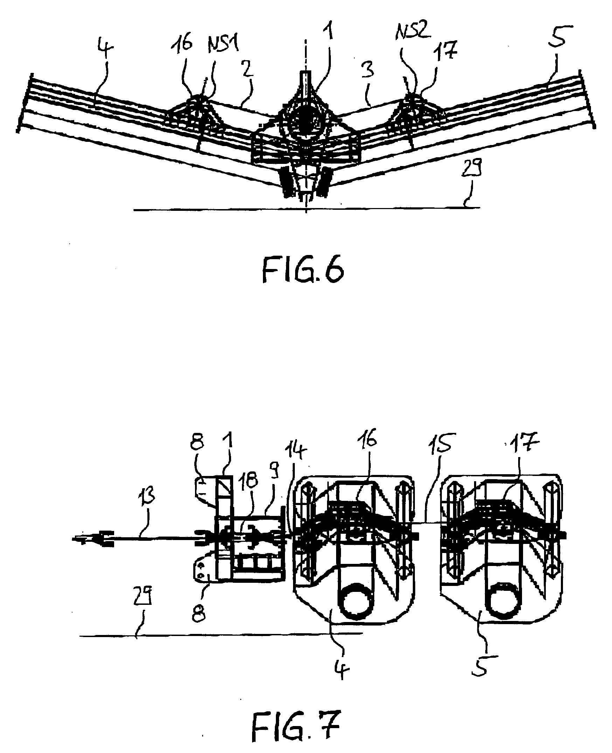

Die Figuren 4 bis 11 zeigen die Mäheinheiten 4, 5 in unterschiedlichen Schwenkstellungen. In den Figuren 4 und 5 sind die Mäheinheiten 4, 5 in der Arbeitsstellung dargestellt. Die Mäheinheiten 4, 5 erstrecken sich über ihre Arbeitsbreite im rechten Winkel zur Arbeitsrichtung und sind horizontal ausgerichtet. Die Mäheinheiten 4, 5 rollen auf dem Boden 29 ab.

In der Arbeitsstellung sind die Hydraulikzylinder zum Anheben der Schwenkarme 2, 3 drucklos geschalten, so dass sich die Schwenkarme 2, 3 in einer Schwimmstellung befinden, in der diese je nach Bodenverlauf relativ zum Traggestell 1 schwenken können. Bei Bodenunebenheiten in Wellenform, deren Wellenkämme parallel zur Erstreckung der Mäheinheiten 4, 5 bzw. im rechten Winkel zur Arbeitsrichtung verlaufen, schwenken die Schwenkarme 4, 5 durch das Abrollen der Mäheinheiten 4, 5 auf den Bvdenunenbenheiten nach oben. Ferner sind die Mäheinheiten 4, 5 um die Nebenschwenkachsen NS1, NS2 frei an den Schwenkarmen 2, 3 schwenkbar, so dass die Mäheinheiten 4, 5 bei Bodenunebenheiten frei schwenken können. Bei Bodenunebenheiten quer zur Arbeitsrichtung können die Mäheinheiten daher diese durch Schwenken gegenüber den Schwenkarmen 2, 3 ausgleichen.

Vorzugsweise ist der Schwenkweg der Mäheinheiten 4, 5 gegenüber den jeweiligen Schwenkarmen 2, 3 durch Anschläge begrenzt.

In Figur 5 ist erkennbar, dass sämtliche Antriebswellen 13, 14, 15 und die Zwischenwelle 18 auf der Hauptschwenkachse HS angeordnet sind. Die Antriebswellen 13, 14, 15, vorzugsweise Gelenkwellen, sind nicht abgewinkelt, wodurch ein optimaler Antrieb gewährleistet ist. Ferner werden selbst bei einem Schwenken der Schwenkarme 2, 3 derart, dass die Mäheinheiten 4, 5 parallel zum Boden ausgerichtet bleiben, die Antriebswellen nicht abgewinkelt.

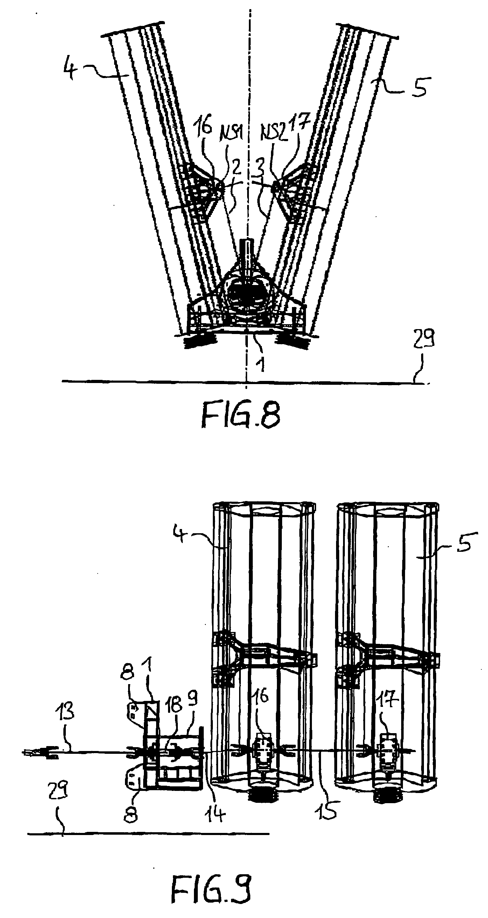

In den Figuren 6 und 7 sind die Mäheinheiten 4, 5 in einer Vorgewendestellung dargestellt. Die Vorgewendestellung stellt eine Zwischenstellung zwischen der Arbeitsstellung und der Transportstellung dar, in die die Mäheinheiten 4, 5 beim Wenden des Traktors überführt werden. In der Vorgewandestellung sind die Mäheinheiten 4, 5 soweit vom Boden angehoben, dass die rotierenden Mähwerkzeuge der Mäheinheiten 4, 5 nicht mit dem in Mähschwaden abgelegten Erntegut in Berührung kommen.

In der Vorgewendestellung sind die Schwenkarme 2, 3 etwas nach oben geschwenkt, so dass die Mäheinheiten 4, 5 vom Boden angehoben sind. Ferner sind die Mäheinheiten 4, 5 aufgrund der Gewichtskräfte gegenüber dem jeweiligen Schwenkarm 2, 3 verschwenkt und zwar derart, dass die inneren Seiten der Mäheinheiten weiter vom Boden angehoben sind. Hierdurch ergibt sich weitere Bodenfreiheit. Um diese Schwenkstellung zu erreichen, sind Schwenkanschläge vorgesehen, die die Mäheinheiten in der in Figur 6 gezeigten Schwenkstellung gegenüber den Schwenkarmen 2, 3 halten.

Aus Figur 7 wird deutlich, dass in der Vorgewendestellung die erste innere Seite der ersten Mäheinheit 4 und die zweite innere Seite der zweiten Mäheinheit 5 angehoben sind, so dass sich ein Abwinkeln der ersten Antriebswelle 14 ergibt. Die Abwinklung ist aber derart gering, dass der Antrieb weiterhin gewährleistet ist.

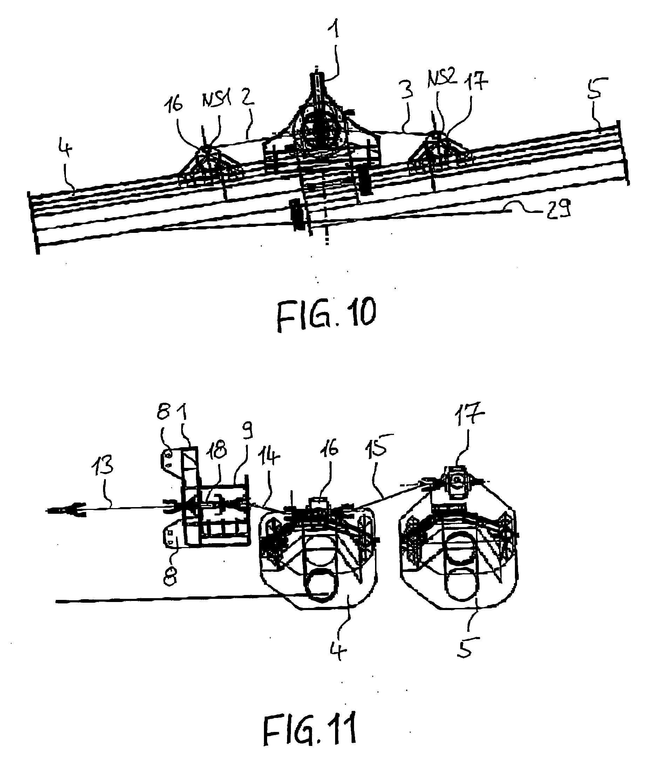

In den Figuren 8 und 9 sind die Mäheinheiten 4, 5 in einer Transportstellung dargestellt. Diese Stellung dient dazu, die Mäheinheiten 4, 5 aneinander zu schwenken und eine möglichst geringe Breite des Mähwerks zu erzielen, damit dieses auf öffentlichen Straßen gefahrlos bewegt werden kann. Wie aus Figur 9 ersichtlich, ist auch bei der Transportstellung nur eine geringfügige Abwinklung der ersten Antriebswelle 14 gegeben, so dass theoretisch selbst in der Transportstellung ein Betrieb der Mäheinheiten 4, 5 möglich wäre. Vorteilhaft wirkt sich dies insbesondere dadurch aus, dass bei Antriebswellen 13, 14, 15 in Form von Kreuzgelenkwellen diese vor dem Überführen der Mäheinheiten 4, 5 in die Transportstellung nicht derart ausgerichtet werden müssen, dass die Kreuzgelenke ohne Beschädigung geklappt werden können. Die Mäheinheiten 4, 5 können ohne vorheriges Ausrichten der Drehposition der Antriebswellen 13, 14, 15 in die Transportstellung geklappt werden.

Die Figuren 10 und 11 zeigen die Mäheinheiten 4, 5 in ihrer Arbeitsstellung, jedoch gegenüber dem jeweiligen Schwenkarm 2, 3 verschwenkt. Die Schwenkarme 2, 3 sind nicht gegenüber dem Traggestell 1 verschwenkt. Aus Figur 11 ist ersichtlich, dass bei einer solchen Stellung der Mäheinheiten 4. 5 sowohl die erste Antriebswelle 14 als auch die zweite Antriebswelle 15 abgewinkelt sind. Ein Betrieb ist jedoch weiterhin möglich.

### Bezugszeichenliste

- 1: Traggestell
- 2: erste Schwenkarm
- 3: zweiten Schwenkarm
- 4: erste Mäheinheit
- 5: zweite Mäheinheit
- 6: Anbaueinrichtung
- 7: Traktor
- 8: Anschlussmittel
- 9: Rohrabschnitt
- 10: Durchgang
- 11: erster Hydraulikzylinder
- 12: zweiter Hydraulikzylinder
- 13: Hauptantriebswelle
- 14: erste Antriebswelle
- 15: zweite Antriebswelle
- 16: erstes Antriebsgetriebe
- 17: zweites Antriebsgetriebe
- 18: Zwischenwelle
- 19: erster Armabschnitt
- 20: erster Armabschnitt
- 21: zweiter Armabschnitt
- 22: zweiter Armabschnitt
- 23: erstes Ende
- 24: erstes Ende
- 25: zweites Ende
- 26: zweites Ende
- 27: freies Ende
- 28: freies Ende
- 29: Boden
- 30: erste innere Seite
- 31: zweite innere Seite

- A: Antriebsrichtung
- HS: Hauptschwenkachse
- NS1: erste Nebenschwenkachse
- NS2: zweite Nebenschwenkachse

## Patentansprüche

1. Mähwerk, das von einer landwirtschaftlichen Maschine, insbesondere einem Traktor (7), in einer Arbeitsrichtung (A) bewegbar ist, umfassend
ein Traggestell (1), das Anschlussmittel (8) zum Anbringen an eine Anbaueinrichtung (6) eines Traktors (7) aufweist,
einen ersten Schwenkarm (2), der um eine erste Hauptschwenkachse (HS) schwenkbar am Traggestell (1) befestigt ist, und
eine erste Mäheinheit (4), die um eine erste Nebenschwenkachse (NS1) schwenkbar am ersten Schwenkarm (2) befestigt ist und mittels des ersten Schwenkarms (2) in eine Arbeitsstellung, eine Vorgewendestellung und eine Transportstellung schwenkbar ist.

2. Mähwerk nach Anspruch 1,
**dadurch gekennzeichnet,**
**dass** die erste Nebenschwenkachse (NS1) zumindest annähernd parallel zur ersten Hauptschwenkachse (HS) und in Arbeitsrichtung (A) betrachtet seitlich versetzt zu dieser angeordnet ist.

3. Mähwerk nach einem der Ansprüche 1 oder 2,
**dadurch gekennzeichnet,**
**dass** das Traggestell (1) einen Rohrabschnitt (9) aufweist, um den der erste Schwenkarm (2) gelagert ist, und
**dass** durch den Rohrabschnitt (9) eine Antriebswelle (18) geführt ist, mittels derer die erste Mäheinheit (4) angetrieben ist.

4. Mähwerk nach Anspruch 3,
**dadurch gekennzeichnet,**
**dass** die durch den Rohrabschnitt (9) geführte Antriebswelle in Form einer Zwischenwelle (18) vorgesehen ist, die im Rohrabschnitt (9) drehbar gelagert ist.

5. Mähwerk nach Anspruch 4,
**dadurch gekennzeichnet,**
**dass** eine erste Antriebswelle (14) vorgesehen ist, die antriebsmäßig mit der Zwischenwelle (18) und einem ersten Antriebsgetriebe (16) zum Antreiben der ersten Mäheinheit (4) verbunden ist.

6. Mähwerk nach Anspruch 5,
**dadurch gekennzeichnet,**
**dass** in Arbeitsstellung der ersten Mäheinheit (4) die Zwischenwelle (18) und die erste Antriebswelle (14) zumindest in etwa auf einer gemeinsamen Achse (HS) angeordnet sind.

7. Mähwerk nach einem der Ansprüche 1 bis 6,
**dadurch gekennzeichnet,**
**dass** ein zweiter Schwenkarm (3) vorgesehen ist, der um eine zweite Hauptschwenkachse (HS) schwenkbar am Traggestell (1) befestigt ist, und
**dass** eine zweite Mäheinheit (5) vorgesehen ist, die um eine zweite Nebenschwenkachse (NS2) schwenkbar am zweiten Schwenkarm (3) befestigt ist und mittels des zweiten Schwenkarms (3) in eine Arbeitsstellung, eine Vorgewendestellung und eine Transportstellung schwenkbar ist.

8. Mähwerk nach Anspruch 7,
**dadurch gekennzeichnet,**
**dass** die zweite Nebenschwenkachse (NS2) zumindest annähernd parallel zur zweiten Hauptschwenkachse (HS) und in Arbeitsrichtung (A) betrachtet seitlich versetzt zu dieser angeordnet ist.

9. Mähwerk nach einem der Ansprüche 7 oder 8,
**dadurch gekennzeichnet,**
**dass** die erste Hauptschwenkachse (HS) und die zweite Hauptschwenkachse (HS) aufeinander liegen.

10. Mähwerk nach einem der Ansprüche 7 oder 9,
**dadurch gekennzeichnet,**
**dass** die erste Nebenschwenkachse (NS1) und die zweite Nebenschwenkachse (NS2) zu unterschiedlichen Seiten von der jeweiligen Hauptschwenkachse (HS) seitlich versetzt angeordnet sind.

11. Mähwerk nach einem der Ansprüche 7 bis 10,
**dadurch gekennzeichnet,**
**dass** die Mäheinheiten (4, 5) in Arbeitsrichtung (A) betrachtet hintereinander angeordnet sind und sich ihre seitlich erstreckenden Arbeitsbreiten teilweise überlappen.

12. Mähwerk nach einem der Ansprüche 7 bis 11,
**dadurch gekennzeichnet,**
**dass** das Traggestell (1) einen Rohrabschnitt (9) aufweist, um den sowohl der erste Schwenkarm (2) als auch der zweite Schwenkarm (3) gelagert ist, und
**dass** durch den Rohrabschnitt (9) eine Antriebswelle (18) geführt ist, mittels derer die Mäheinheiten (4, 5) angetrieben sind.

13. Mähwerk nach Anspruch 12,
**dadurch gekennzeichnet,**
**dass** die durch den Rohrabschnitt (9) geführte Antriebswelle in Form einer Zwischenwelle (18) vorgesehen ist, die im Rohrabschnitt (9) drehbar gelagert ist.

14. Mähwerk nach Anspruch 13,
**dadurch gekennzeichnet,**
**dass** eine erste Antriebswelle (14) vorgesehen ist, die antriebsmäßig mit der Zwischenwelle (18) und einem ersten Antriebsgetriebe (16) zum Antreiben der ersten Mäheinheit (4) verbunden ist, und
**dass** eine zweite Antriebswelle (15) vorgesehen ist, die antriebsmäßig mit dem ersten Antriebsgetriebe (16) und einem zweiten Antriebsgetriebe (17) zum Antreiben der zweiten Mäheinheit (5) verbunden ist.

15. Mähwerk nach Anspruch 14,
**dadurch gekennzeichnet,**
**dass** in Arbeitsstellung der Mäheinheiten (4, 5) die Zwischenwelle (18), die erste Antriebswelle (14) und die zweite Antriebswelle (15) zumindest in etwa auf einer gemeinsamen Achse (HS) angeordnet sind.

16. Mähwerk nach einem der Ansprüche 14 oder 15,
**dadurch gekennzeichnet,**
**dass** die Antriebsgetriebe (16, 17) jeweils an einem einer Mittelachse (HS) des Traggestells (1) angenäherten Seite der jeweiligen Mäheinheiten (4, 5) angeordnet sind.
